# EUROPEAN PATENT APPLICATION

(11) **EP 4 776 173 A1**
(43) Date of publication of application: **15.07.2026**
(21) Application number: 26151161.2
(22) Date of filing: 09.01.2026
(51) Int. Cl.: G06F 30/27

(54) **SYSTEMS AND ASSOCIATED METHODS FOR DIGITAL TRACEABILITY OF MANUFACTURING INFORMATION**

(30) Priority: 13.01.2025 US 202519018740
(71) Applicant: RTX Corporation, Farmington, CT 06032 (US)
(72) Inventor: GUO, Changsheng, Windsor, Connecticut (US); GWARA, Michael Stanley, Wethersfield, Connecticut (US)
(74) Representative: Dehns

(57) **Abstract**

A system for traceability of manufacturing data may include one or more processors coupled to memory. The one or more processors may be collectively operable to execute a mapping environment. The mapping environment may be operable to access a production set of manufacturing instructions associated with a component design. The mapping environment may be operable to access real manufacturing data associated with execution of the production set of manufacturing instructions. The mapping environment may be operable to generate an evaluation set of manufacturing instructions associated with respective unique identifiers. The unique identifiers may be assigned to respective geometric features of the component design. The mapping environment may be operable to generate a mapped set of manufacturing instructions including the unique identifiers assigned to respective portions of the production set of manufacturing instructions based on the evaluation set of manufacturing instructions.

## Description

### BACKGROUND

This disclosure relates to traceability of various information, including information associated with manufacturing components.

Gas turbine engine components such as airfoils may include complex geometries. Manufacturing equipment may be used to manufacture the components according to one or more computer-aided design (CAD) models that define the geometry. A vast amount of information associated with the manufacturing process may be generated and may be stored for evaluation.

### SUMMARY

A system for traceability of manufacturing data according to an implementation may include one or more processors coupled to memory. The one or more processors may be collectively operable to execute a mapping environment. The mapping environment may be operable to access a production set of manufacturing instructions associated with a component design. The mapping environment may be operable to access real manufacturing data associated with execution of the production set of manufacturing instructions. The mapping environment may be operable to generate an evaluation set of manufacturing instructions associated with respective unique identifiers. The unique identifiers may be assigned to respective geometric features of the component design. The evaluation set of manufacturing instructions may differ from the production set of manufacturing instructions. The mapping environment may be operable to generate a mapped set of manufacturing instructions including the unique identifiers assigned to respective portions of the production set of manufacturing instructions based on the evaluation set of manufacturing instructions. The mapping environment may be operable to generate simulated manufacturing data in response to simulated execution of the mapped set of manufacturing instructions. The mapping environment may be operable to map respective portions of the real manufacturing data to the respective geometric features in response to comparing the real manufacturing data and the simulated manufacturing data.

In any implementations, the mapping environment may be operable to access a computer-aided design (CAD) model associated with the component design. The mapping environment may be operable to generate the evaluation set of manufacturing instructions based on the CAD model.

In any implementations, the mapping environment may include a machine learning model operable to map the respective portions of the real manufacturing data to the respective geometric features.

In any implementations, the machine learning model may be trained with training data. The training data may include simulated manufacturing data associated with unique identifiers assigned to geometric features of respective component designs. The training data may include real manufacturing data associated with manufacture of one or more physical instances of the geometric features of the component designs.

In any implementations, the training data may include manufacturing instructions associated with the simulated manufacturing data and the respective unique identifier. The training data may include manufacturing instructions associated with the real manufacturing data that may omit any unique identifiers.

In any implementations, the mapping environment is operable to assign the unique identifiers to the mapped portions of the real manufacturing data.

In any implementations, the mapping environment may include a machine learning model operable assign the unique identifiers to the mapped portions of the real manufacturing data.

In any implementations, the mapping environment may be operable to access a plurality of manufacturing repositories including a manufacturing equipment repository. The manufacturing equipment repository may include collected information associated with operation of manufacturing equipment. Entries in the manufacturing repositories may be associated with unique identifiers assigned to respective geometric features of a plurality of component designs to establish a set of digital threads linking the respective entries across the manufacturing repositories by the respective unique identifier. The mapping environment may be operable to store the mapped portions of the real manufacturing data with the respective assigned unique identifiers as one or more entries in the manufacturing equipment repository.

In any implementations, the mapping environment may be operable to evaluate the real manufacturing data with respect to another one of the entries associated with one or more of the assigned unique identifiers.

In any implementations, the real manufacturing data and the simulated manufacturing data may be associated with a set of manufacturing parameters. The mapping environment may be operable to assign the unique identifiers to the respective portions of the real manufacturing data in response to comparing the real manufacturing data and the simulated manufacturing data with respect to one or more of the manufacturing parameters.

In any implementations, the unique identifiers may be embedded in non-executable portions of the mapped set of manufacturing instructions.

In any implementations, the component design may be associated with a gas turbine engine component.

A non-transitory computer-readable medium according to an implementation may have computer-executable instructions that, when executed by one or more processors, may cause the one or more processors to collectively execute a mapping environment operable to access a production set of manufacturing instructions associated with a component design. The mapping environment may be operable to access real manufacturing data associated with execution of the production set of manufacturing instructions. The mapping environment may be generate an evaluation set of manufacturing instructions associated with respective unique identifiers. The unique identifiers may be assigned to respective geometric features of the component design. The mapping environment may be operable to generate a mapped set of manufacturing instructions including the unique identifiers assigned to respective portions of the production set of manufacturing instructions based on the evaluation set of manufacturing instructions. The mapping environment may be operable to generate simulated manufacturing data in response to simulated execution of the mapped set of manufacturing instructions. The mapping environment may be operable to assign the unique identifiers to respective portions of the real manufacturing data in response to comparing the real manufacturing data and the simulated manufacturing data.

In any implementations, the mapping environment may include a machine learning model. The machine learning model may be operable to assign the unique identifiers to the respective portions of the real manufacturing data.

A method for establishing traceability of manufacturing data according to an implementation may include generating an evaluation set of manufacturing instructions associated with respective unique identifiers. The unique identifiers may be assigned to respective geometric features of a component design. The method may include mapping a production set of manufacturing instructions to the unique identifiers to establish a mapped set of manufacturing instructions. The production set of manufacturing instructions may be associated with the component design. The method may include generating simulated manufacturing data based on the mapped set of manufacturing instructions. The method may include assigning the unique identifiers to respective portions of the real manufacturing data based on the simulated manufacturing data.

In any implementations, the method may include collecting the real manufacturing data during manufacturing of one or more physical instances of the geometric features of the component design.

In any implementations, the method may include using a machine learning model to perform the assigning step.

In any implementations, the method may include training the machine learning model based on information in one or more manufacturing repositories associated with one or more component designs. The method may include comparing, using the trained machine learning model, one or more manufacturing parameters associated with the real manufacturing data and the simulated manufacturing data to determine the assignments of the unique identifiers to the respective portions of the real manufacturing data.

In any implementations, the comparing step may include determining, used the trained machine learning model, one or more patterns in the real manufacturing data that substantially match one or more patterns in the simulated manufacturing data associated with the respective component design.

In any implementations, the method may include accessing one or more manufacturing repositories including a manufacturing equipment repository. The manufacturing equipment repository may include collected information associated with operation of manufacturing equipment. Entries in the manufacturing repositories may be associated with unique identifiers assigned to respective geometric features of a plurality of component designs to establish a set of digital threads linking the respective entries across the manufacturing repositories by the respective unique identifier. The method may include storing the assigned unique identifiers with the respective portions of the real manufacturing data as entries in the manufacturing equipment repository.

In any implementations, the component design may be associated with a gas turbine engine component.

The present disclosure may include any one or more of the individual features disclosed above and/or below alone or in any combination thereof.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 discloses a system according to an implementation.
Figure 2 discloses a perspective view of a gas turbine engine component.
Figure 3 discloses a method of mapping information according to an implementation.
Figure 4 discloses a set of instructions associated with a feature identifier (ID).
Figure 5, including portions divided into Figures 5-1 to 5-4, disclose a set of instructions and values of associated parameters identified by a feature ID according to an implementation.
Figure 6 discloses a method of mapping information according to another implementation.
Figures 7A-7B disclose selected portions of Figure 6.

Like reference numbers and designations in the various drawings indicate like elements.

### DETAILED DESCRIPTION

The disclosed systems and methods relate to (e.g., digital) traceability of information, which may be associated with the manufacture of various components.

With the implementation of Industry 4.0 and connected machines/factories, a relatively large amount of (e.g., legacy) manufacturing and/or inspection information (e.g., data) may be collected during component (e.g., part) manufacturing. The manufacturing data, such as process monitoring and machine health monitoring, may be mostly time-based and may not have any direct links to design (e.g., geometric) features of the component being manufactured. Current practices of collecting and using manufacturing data may be very time-consuming. Users may manually retrieve and then align data to the component model, geometry, characteristic, and feature data from as-measured and as-collected data generated by manufacturing and inspection operations. Effective extraction of manufacturing knowledge from the collected data may require the data to be aligned with geometric features being manufactured (e.g., machined), the process parameters being used, and the machine conditions under which the component may be manufactured (e.g., machined). By embedding this (e.g., context) information within the available data, including embedding traceability linked to the design features, knowledge graphs (KG) and/or machine learning (ML) may be used to model, interpret and/or otherwise evaluate the data. Insights may be gained into the manufacturing process, and information may be extracted from the data for process improvement and/or development of new manufacturing and/or inspection techniques.

The disclosed techniques may be utilized to contextualize manufacturing data by embedding digital traceability in the data. The disclosed systems and methods may be utilized to establish traceability for legacy and/or current manufacturing and/or inspection information (e.g., data). Model-based manufacturing (e.g., machining) simulations may be utilized to append or otherwise associate feature identifiers (IDs), such as universal unique identifiers (UUIDs), linked to geometric features of a component (e.g., CAD) design to (e.g., all) downstream manufacturing and inspection data. First, an enhanced version of production manufacturing instructions (e.g., G-code) may be generated, which may contain the UUIDs assigned to the respective geometric features of the component design. The enhanced manufacturing instructions may include the exact same functional lines as the production manufacturing instructions, but may also include the UUIDs in non-executable (e.g., comment) portions of the instruction set. Manufacturing (e.g., machining) simulations may be performed with the enhanced manufacturing instructions to generate output process parameters (e.g., speed, feed or tool information) and/or process data (e.g., power, vibration or forces) that may be collected in production using sensors, measurements and/or other outputs that may be stored (e.g., archived) in memory, including a storage/retrieval system such as data lake(s). The simulation data may include or may otherwise be associated with the same UUIDs from the enhanced manufacturing instructions. Data mining, machine learning and/or feature recognition may be used to align the simulation data with the (e.g., legacy) data collected from production by identifying and compare patterns. The UUIDs from the simulation data may be copied and inserted into the collected (e.g., legacy) production data.

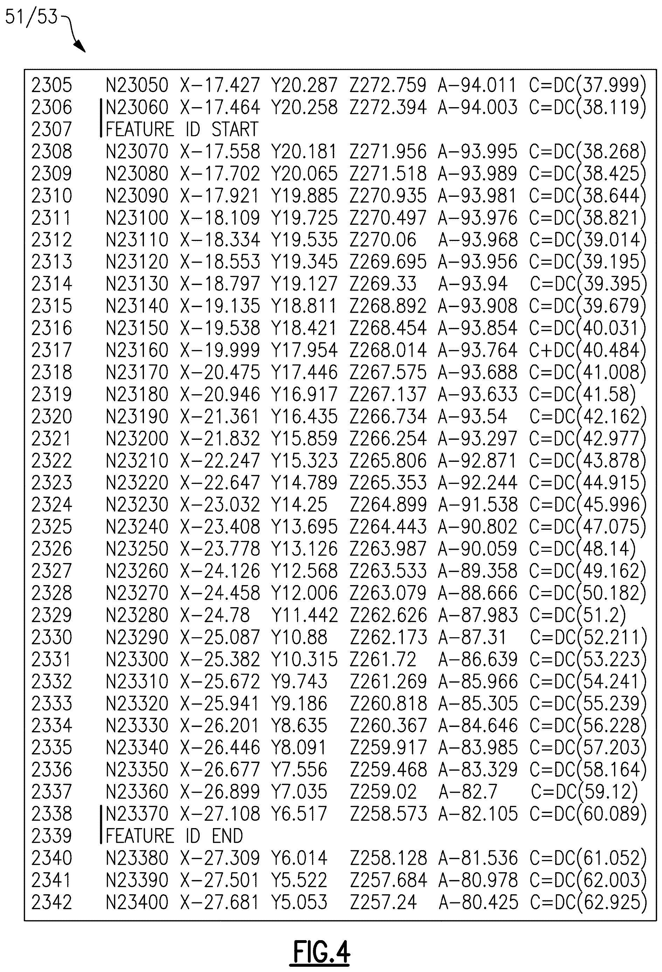

The real (e.g., legacy) manufacturing information (e.g., data) may be mapped to the respective production (e.g., legacy) manufacturing instruction(s), geometric feature(s) and/or UUIDs utilizing various techniques. The mappings may establish traceability of the real manufacturing information. The mappings may be established based on one or more of the following blocks (e.g., steps), which may be performed in sequence. At step 1, a CAD design with UUIDs may be linked to design (e.g., geometric) features. The native (e.g., NX, CATIA or Solidworks) or neutral (e.g., STEP) CAD model may be created. The model geometry, surfaces, product manufacturing information (PMI) and/or characteristic(s) associated with the CAD design may be grouped together into a design (e.g., geometric) feature and appended with a respective UUID, which may be stored with the CAD model. Implementations of the design features may include an airfoil leading edge or a hole in a turbine disk. At step 2, (e.g., evaluation) manufacturing instructions (e.g., G-code) may be generated containing the UUIDs from the CAD design. The UUIDs from the CAD design may be carried into downstream work (e.g., manufacturing) instructions (e.g., NC programs or G-codes). The lines of the evaluation manufacturing instructions for forming (e.g., machining) features of the CAD design may be grouped and segmented with the respective UUIDs (e.g., Figure 4). At step 3, the production manufacturing instructions may be compared to the evaluation manufacturing instructions to determine which UUIDs may be associated with the respective production manufacturing instructions. The UUIDs may be assigned to the respective production manufacturing instructions to establish one or more mapped sets of production manufacturing instructions.

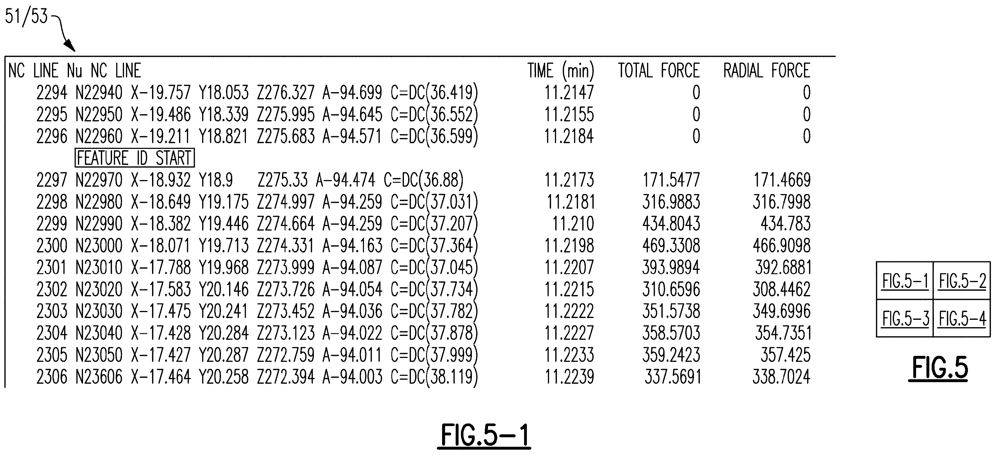

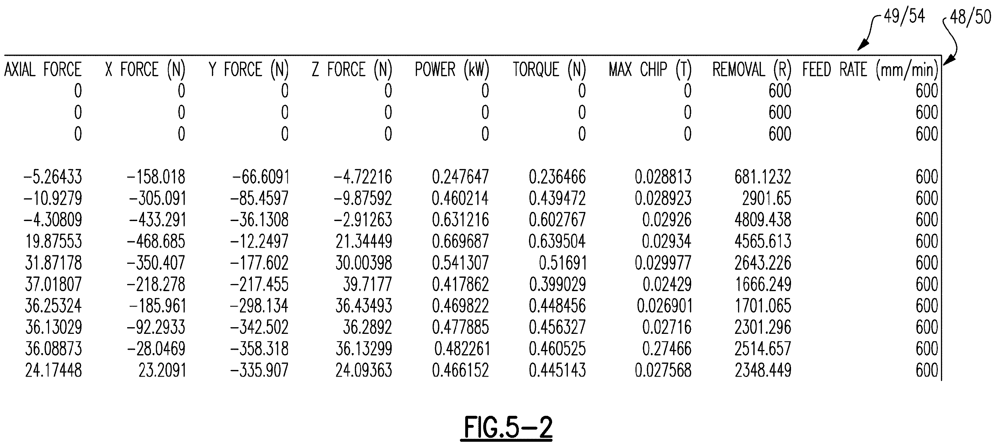

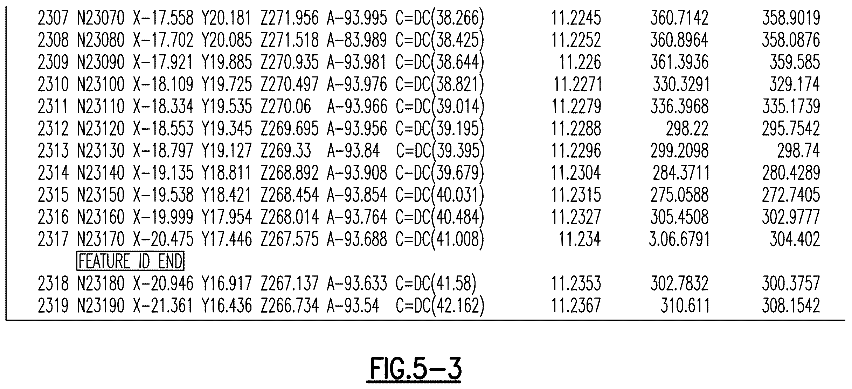

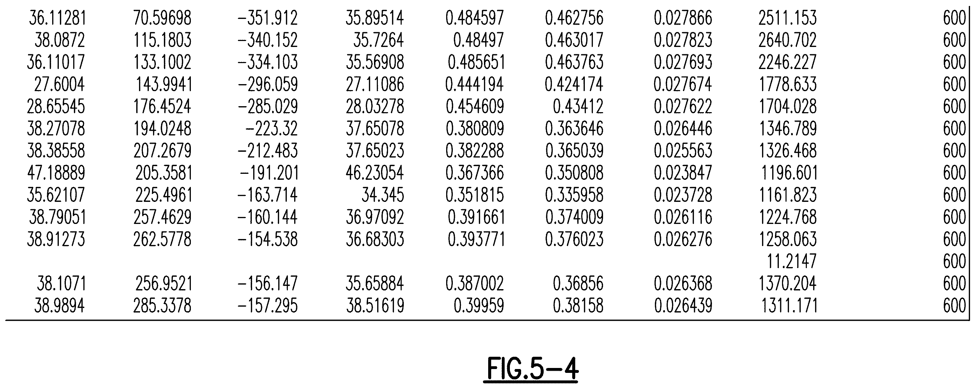

At step 4, one or more manufacturing (e.g., machining) simulations using the mapped instructions may be performed to generate (e.g., output) process parameters and the simulated process data being monitored and/or collected in actual production such as speed, feed, spindle power, vibration or temperature. The simulation data may be stored with the respective lines of the mapped instructions and UUIDs (e.g., Figures 5 and 5-1 to 5-4). Simulation tools such VeriCut Force, Thirdwave Production module or MachPro may be used to generate the process performance data with traceability between the respective lines of the mapped instructions and UUIDs.

At step 5, production collected process data associated with the legacy production manufacturing instructions may be compared to the simulation generated data to align (e.g., map) the legacy manufacturing data with the geometric features and/or UUIDs of the respective CAD design. The legacy manufacturing data may be matched with the simulated manufacturing data. Data mining and/or machine learning may be used to identify patterns and align the data. The geometric features and/or UUIDs may be mapped to the respective line(s) of the legacy manufacturing data based on the matching. The disclosed techniques may provide automatic data processing to extract useful information.

At step 6, identifiers associated with the geometric features such as UUIDs may be embedded in and/or otherwise associated with the respective (e.g., legacy) production collected process data. The UUIDs may be present and traceable within both the as-designed and as-built program and process data for automation and various uses, including any of the uses disclosed herein.

Other systems and processes may benefit from the teachings disclosed herein. The disclosed techniques may be utilized to evaluate (e.g., legacy) inspection information, including mapping inspection (e.g., coordinate measurement machine) instructions and/or associated data to geometric feature(s) and/or UUID(s) of respective component design(s).

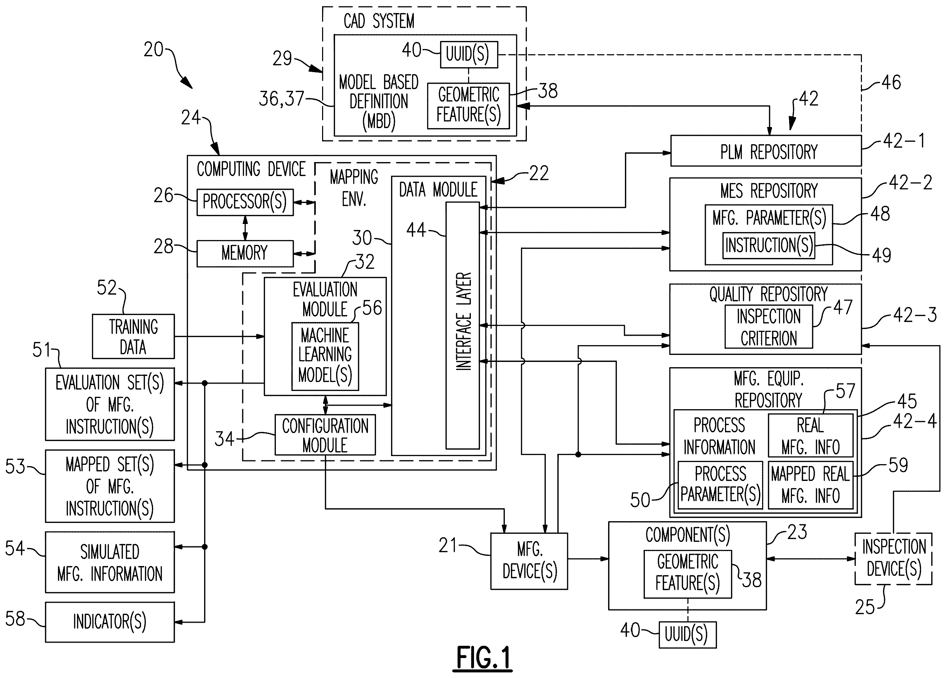

Figure 1 discloses a system 20 according to an implementation. The system 20 may be utilized to establish traceability of (e.g., legacy) manufacturing information (e.g., data), which may be associated with various as-manufactured physical components (e.g., parts), including one or more gas turbine engine components. The gas turbine engine components may include components of a propulsor, compressor, combustor and/or turbine, including airfoils and other parts having various geometries. The system 20 may be operable to associate (e.g., map or assign) the manufacturing information to one or more geometric features and/or UUIDs of the respective component design.

The system 20 may include a mapping environment 22. The mapping environment 22 may be operable to communicate with one or more manufacturing devices 21. The manufacturing device(s) 21 may be operable to manufacture, produce or otherwise form one or more physical (e.g., manufactured) components (e.g., parts) 23. Various manufacturing devices may be utilized, including milling devices such as CNC machines, additive manufacturing devices such as three-dimensional (3D) printers, injection molding machines, laser cutting machines, lathes, grinding machines, welding devices, and/or surface (e.g., heat) treatment devices.

The mapping environment 22 may be operable to communicate with one or more inspection devices 25. The inspection device(s) 25 may be operable to physically inspect the components 23. The inspection device(s) 25 may include one or more sensors (e.g., probes, lasers or cameras) for performing an inspection. Various inspection devices 25 may be utilized, including a coordinate measurement machine (CMM). The system 20 may be operable to inspect the physical component 23 by comparing the physical geometry to the corresponding as-designed geometry and associated constraints (e.g., dimensions or tolerances).

The system 20 may include one or more computing device(s) 24 operable to execute the mapping environment 22. The computing device 24 may include one or more computer processors 26, memory 28, storage means, network devices, input and/or output devices, and/or interfaces. The processor(s) 26 may be coupled to the memory 28. The processor(s) 26 may be collectively operable to execute the mapping environment 22. The computing device 24 may be operable to execute one or more software programs, including one or more portions of the mapping environment 22. The computing device 24 may be operable to communicate with one or more networks established by one or more computing devices. The memory may include UVPROM, EEPROM, FLASH, RAM, ROM, DVD, CD, a hard drive, cloud storages, or other computer readable medium which may store data and/or the functionality of this description. The computing device 24 may be a desktop computer, laptop computer, smart phone, tablet, or any other computing device. Input devices may include a keyboard, mouse and/or touchscreen. The output devices may include a monitor, speakers and/or printers. The functionality of the mapping environment 22 and/or methods disclosed herein may be stored in a non-transitory computer-readable medium, including any of the memory devices disclosed herein. The non-transitory computer-readable medium may have computer-executable instructions that, when executed by the one or more processors 26, may cause the processor(s) 26 to individually and/or collectively execute the mapping environment 22 to perform any of the functionality disclosed herein.

The mapping environment 22 may include one or more modules. In implementations, the mapping environment 22 may include a first (e.g., data or interface) module 30, a second (e.g., evaluation or mapping) module 32 and/or a third (e.g., configuration) module 34. Although three modules are disclosed, the mapping environment 22 may include fewer or more than three modules and the functionality of the modules may be combined and/or separated to provide the disclosed functionality.

Each component 23 may be associated with a respective component design 37, which may be specified by a respective model-based definition (MBD) 36. The component design 37 may be associated with any of the components disclosed herein, including a gas turbine engine component and/or assembly. The MBD 36 may include a virtual three-dimensional (e.g., CAD) model, model derivative(s) and/or associated product manufacturing information (PMI). The CAD model may be generated by a CAD system 29 (e.g., CATIA, AutoCAD, Solidworks or Siemens NX). The PMI may include various information including tolerances and/or other dimensional requirements, and/or material requirements. The component design 37 and/or associated physical component 23 may include one or more component (e.g., geometric) features 38, such as an edge, face and/or hole. The CAD model may include a virtual representation of the component 23 and respective geometric features 38. The physical component 23 may be manufactured based on the geometry and any associated attributes specified by the component design 37. The geometric features 38 may have various characteristics, including one or more dimensions (e.g., width, length and/or diameter). In implementations, the characteristics may be assigned their own feature ID(s) (e.g., UUIDs) 40.

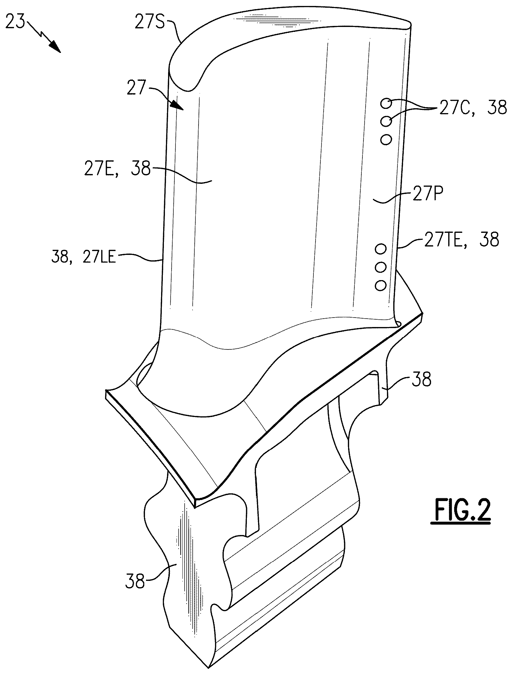

In the implementation of Figure 2, the component 23 may include an airfoil 27 having geometric features 38 such as an airfoil leading edge 27LE, pressure side 27P, suction side 27S, trailing edge 27TE, external surface contour 27E, cooling features (e.g., passages) 27C, etc. The disclosed techniques may be utilized to evaluate (e.g., manufacturing) information associated with other components of a gas turbine engine and/or components of other systems having various geometries.

Still referring to Figure 1, the data module 30 may be operable to interface with (e.g., access) one or more systems and/or information (e.g., data) sources, including one or more (e.g., manufacturing) repositories 42. The repositories 42 may contain all the Design, Manufacturing, and Inspection (DMI) data associated with the component design(s) 36 and may be linked to the geometric features 38 and/or associated characteristics of the MBD 36 for one or more components 23. The DMI data may be stored in various formats and may be stored in various databases and/or cloud-based storage, including Industry 4.0 (IO4.0) compliant formats.

The repositories 42 may include a product lifecycle management (PLM) repository 42-1, a manufacturing execution system (MES) repository 42-2, a quality repository 42-3 and/or a manufacturing equipment repository 42-4. Data and other information may be stored in the repositories 42 using various formats and data structures. In implementations, the repositories 42 may include one or more (e.g., relational) databases including one or more entries associated with information. The entries may store the information and/or may include link(s) to the information. The PLM repository 42-1 may include an overarching data store. The MES repository 42-2 may include information relating to fabrication of components (e.g., parts), including operation logs and one or more instructions to manufacture the part(s). The quality repository 42-3 may include information associated with the physical component(s) 23 and/or associated component design(s) 36. The manufacturing equipment (e.g., connected factory) repository 42-4 may include information associated with a manufacturing environment, including an environment of the respective manufacturing device(s) (e.g., equipment) 21. The manufacturing equipment repository 42-4 may include information relating to collected information (e.g., signals) associated with operation of the manufacturing device(s) 21, such as running speed, temperature, and/or pressure, which may be utilized to determine quality issues with parts. The collected information may include one or more sets of real manufacturing information (e.g., data) 57. It should be understood that the data module 30 may be operable to interface with fewer or more than four repositories, and information associated with the repositories may be stored in one or more memory devices.

The data module 30 may include an interface layer 44. The interface layer 44 may be operable to access information stored in the repositories 42. The interface layer 44 and/or another portion of the data module 30 may be operable to access the repositories 42. Entries in the repositories 42 may be associated with UUIDs 40 assigned to respective geometric features 38 of one or more component design(s) 36 to establish a set of (e.g., feature level) digital threads 46. The UUIDs 40 may be associated with various manufacturing and quality databases to establish the feature level digital threads 46. The digital threads 46 may link the respective MBD(s) 36 and/or entries across the repositories 42 by the respective UUIDs 40. The digital thread 46 may be a logical connection of information associated with the same UUID 40 or may be a set of links to the information. The digital threads 46 may provide data traceability across the repositories 42 and associated data sets, including the DMI data. The interface layer 44 and/or another portion of the data module 30 may be operable to read, write, edit, store and/or otherwise access information in the manufacturing repositories 42 based on the respective UUIDs 40. One would understand how to program the interface layer 44 with logic to interface with the manufacturing repositories 42.

The interface layer 44 and/or another portion of the data module 30 may be operable to access feature information associated with the component design(s) 36. The feature information may include a geometry of the respective geometric feature 38. In implementations, the feature information may include three-dimensional CAD geometry and/or PMI associated with the respective features 38 of the component design 37. The feature information may include various attributes including dimension(s) and/or tolerance(s) associated with the geometric feature(s) 38. The feature information may include UUID(s) 40 assigned to the respective geometric feature(s) 38. In implementations, the feature information may include information stored in one or more of the repositories 42 associated with the respective UUID 40. Information in the repositories 42 may be stored in different formats. The interface layer 44 may be operable to access information in the repositories 42 using various techniques, such as knowledge graph(s) and/or ontology based data integration. An ontology may be utilized to crosswalk the data structures and linkages. The CAD system 29 may be operable to store the MBD 36, component design 37 and/or associated UUIDs 40 in the PLM repository 42-1.

The MES repository 42-2 may be operable to store one or more manufacturing parameters 48, including any of the parameters disclosed herein. The manufacturing parameters may include a configuration (e.g., type, model, condition, etc.) of the respective manufacturing device 21. The manufacturing parameters 48 may include one or more (e.g., production) manufacturing instructions 49. Sets of the manufacturing instructions 49 may establish one or more subroutines. The instructions 49 may be associated with manufacture of physical instance(s) of the respective geometric feature(s) 38 of the component design(s) 36. Each manufacturing instruction 49 and/or set of instructions 49 may be associated with one or more of the UUIDs 40. Each set of instructions (e.g., subroutine) 49 in the MES repository 42-2 may be associated with only one, or more than one, respective UUID 40. The instructions 49 may be operable to control or otherwise cause the manufacturing device(s) 31 to manufacture the component 23 and/or associated geometric feature(s) 38. The instructions 49 may be operable to control the manufacturing device 21 to manufacture or otherwise form a physical instance of one or more geometric feature(s) 38 of an associated physical component 23, which may be associated with the respective UUID(s) 40.

The manufacturing parameter(s) 48 may be controlled or otherwise set prior to, during and/or subsequent to manufacture of the physical component(s) 21. The manufacturing parameters 48 may be defined in the manufacturing instruction(s) 49 (e.g., CNC program). An operator of the manufacturing device 21 may override the instruction(s) 49 (e.g., slow down the device 21). The manufacturing parameters 48 may be monitored during execution of the respective instruction(s) 49 to operate the manufacturing device 21.

The configuration module 34 may be operable to set (e.g., adjust) one or more of the manufacturing parameters 48, including one or more of the manufacturing instructions 49 and/or associated variable(s), which may be used by the manufacturing device 21 to manufacture one or more components 23. The parameter(s) 48 set (e.g., adjusted) by the configuration module 34 may be stored in the MES repository 42-2.

The interface layer 44 and/or another portion of the data module 30 may be operable to access process (e.g., monitoring) information 45. The process information 45 may be associated with a manufacturing environment, including the environment of the respective manufacturing device(s) 21. The process information 45 may be obtained (e.g., collected) during manufacture of physical instance(s) of the respective geometric feature(s) 38 of the component(s) 23, which may be according to one or more respective manufacturing parameters 48. The process information 45 may be associated with one or more UUIDs 40 assigned to the geometric feature(s) 38 of the respective component design 37.

The process information 45 may include one or more process parameters 50. The process parameters 50 may include any of the parameters disclosed herein, including the manufacturing parameters 48. The parameters 48, 50 may be the same or may differ from each other. Other process parameters 50 may not be directly controlled, such as vibration, temperature and/or noise, which may flow out of the manufacturing process. The process parameters 50 may be monitored during execution of the respective instruction(s) 49 to operate the manufacturing device 21.

The interface layer 44 and/or another portion of the data module 30 may be operable to access one or more inspection criterion 47. The inspection criterion 47 may be associated with one or more UUIDs 40 assigned to the geometric feature(s) 38 of the respective component design 37. Each inspection criterion 47 may be stored in the quality repository 42-3. Various inspection criterion 47 may be utilized. The inspection criterion 47 may include tolerance(s) associated with the dimension(s) of the respective geometric feature(s) 38. The inspection criterion 47 may include one or more manufacturing acceptance criterion (MAC). Manufacturing acceptance criteria may include limits (e.g., conditions) that an entity may set on the characteristics of physical components to ensure that the components meet manufacturing and/or servicing requirements. The acceptance criteria may need to be met before the component may be considered finished (e.g., complete).

The evaluation module 32 may be operable to determine (e.g., predict or infer) whether physical instance(s) of the geometric feature(s) 38 of the (e.g., outgoing or finished) component(s) 23 meet one or more respective inspection criterion 47. The evaluation module 32 may be operable to make the determination based on any of the techniques and/or information disclosed herein.

A relatively large quantity of process information 45 may be generated and/or obtained (e.g., captured) during the manufacture of the components 23. The process information 45 may be generated in response to execution of respective (e.g., production) manufacturing instruction(s) 49, which may be certified for use in production. The production instructions 49 and/or associated parameter(s) 48 may be modified to meet production intent. The mapping environment 22 may be operable to associate (e.g., map) the process information 45 to respective features 38 of the component design(s) 36 and/or UUID(s) 40. The mapping environment 22 may be operable to associate (e.g., map) the process information 45 to the respective manufacturing (e.g., production) instructions 49 associated with the manufacture of the geometric feature(s) 38 of the component design(s) 36.

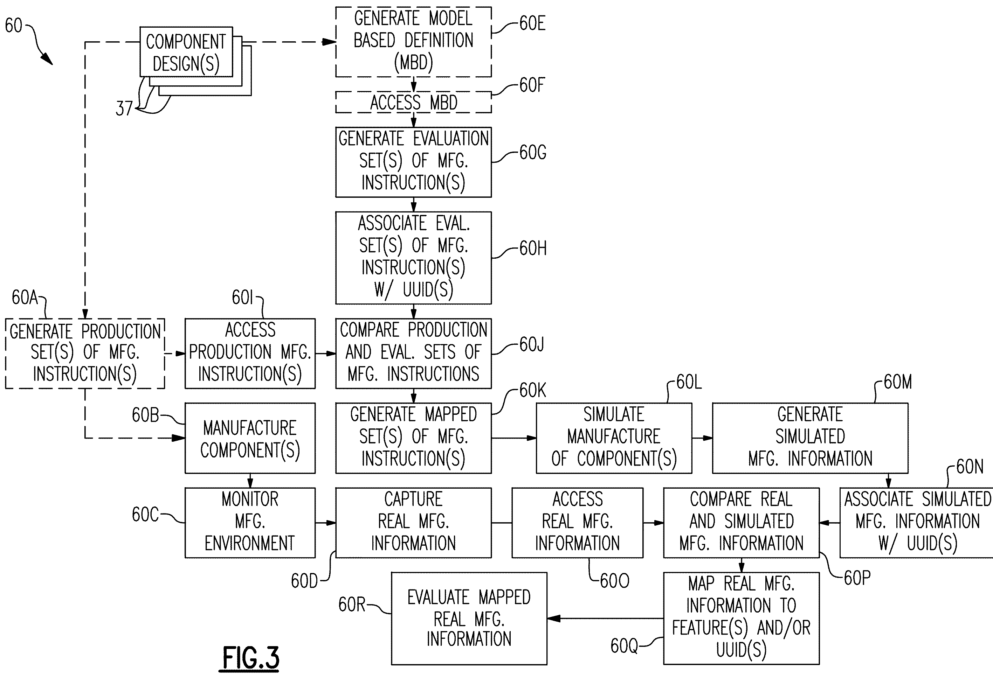

Figure 3 discloses a method in a flowchart 60 for evaluating manufacturing information (e.g., data) according to an implementation. The method 60 may be utilized to establish traceability of manufacturing information (e.g., data) to aspects of one or more component designs, including features and/or UUIDs. The method 60 may be utilized to evaluate manufacturing information associated with various physical (e.g., as-manufactured) components, including any of the gas turbine engine components and associated features disclosed herein, such as the component 23. Fewer or additional steps than are recited below could be performed within the scope of this disclosure, and the recited order of steps is not intended to limit this disclosure. The mapping environment 22 may be programmed with logic for performing the method 60. Reference is made to the system 20.

Referring to Figure 2, with continuing reference to Figure 3, at block 60A one or more first (e.g., production) sets of manufacturing instructions 49 may be generated. The production set of manufacturing instructions 49 may be associated with a respective component design 37. The component design 37 may be associated with any of the components disclosed herein. In implementations, the data module 30 and/or another portion of the mapping environment 22 may be operable to generate the production set(s) of manufacturing instructions 49. The manufacturing instructions 49 may be generated in various formats, including work instructions such as NC programs and/or G-codes. The production manufacturing instructions 49 may lack any mapping to the respective geometric features 38 and/or UUID(s) 40 of the component design 37.

At block 60B, one or more physical components may be manufactured using one or more manufacturing devices 21. The components may be manufactured utilizing various techniques, including any of the techniques disclosed herein. The components may include any of the components discussed herein, such as one or more gas turbine engine components. Block 60B may include executing the production set(s) of manufacturing instruction(s) 49 on the manufacturing device(s) 21.

At block 60C, a manufacturing environment may be monitored. Block 60C may include monitoring the manufacturing device(s) 21 and/or an environment of the manufacturing device(s) 25. Block 60C may include obtaining real manufacturing information (e.g., data) 57 associated with manufacture of the component(s) 23. The real manufacturing data 57 may be associated with execution of the production set(s) of manufacturing instruction(s) 49. The real manufacturing data 57 may be associated with one or more manufacturing and/or process parameters 48, 50. The parameters 48, 50 may be associated with operation of the manufacturing device(s) 21 and may include any of the parameters disclosed herein such as speed, feed, spindle power, vibration and/or temperature.

At block 60D, the real manufacturing information 57 may be captured (e.g., collected or obtained). Block 60D may include storing the real manufacturing information 57 in the manufacturing equipment repository 42-3. Block 60D may include collecting the real manufacturing data 57 during the manufacture of one or more physical instances of the geometric feature(s) 38 of the component design(s) 37. The data module 30 and/or another portion of the mapping environment 22 may be operable to capture (e.g., collect) the real manufacturing information 57.

The production set(s) of manufacturing instruction(s) 49 and/or real manufacturing information 57 may omit traceability to geometric feature(s) 38 and/or UUID(s) 40 associated with the respective component design 37. In implementations, the (e.g., legacy) manufacturing instruction(s) 49 and/or associated real manufacturing information 57 may be generated prior to assigning UUID(s) 40 to the geometric feature(s) 38 of a the respective component design(s) 37.

At block 60E, one or more MBDs 36 may be generated. The MBD 36 may include a respective component (e.g., CAD) design 37, which may include one or more (e.g., geometric) features 38. UUID(s) 40 may assigned to respective geometric features 38 of the component design 37. Block 60E may include generating a native CAD model using a CAD tool, such as NX, CATIA, or Solidworks. The component design(s) 37 corresponding to the production set(s) of instructions 49 may be associated with the component design(s) 37 of respective MBD(s) 36. In implementations, the component design(s) 37 associated with the (e.g., legacy) manufacturing instruction(s) 49 and/or associated real manufacturing information 57 may differ from the MBD 36, but the component design(s) 37 may have one or more common geometric features 38 (e.g., hole geometry or edge profile).

Block 60E may include generating a derivate (e.g., neutral) file from the CAD model, such as a STEP file. The derivative file may be generated by various tools, such as NX Open. The native CAD file and/or derivative file may include one or more UUIDs 40 associated with the respective geometric feature(s) 38 of the component design 37. Block 60E may including linking or otherwise associating the UUIDs 40 to the respective geometric feature(s) 38. The model geometry, surfaces, PMI and/or characteristic may be grouped together into a respective feature 38 and may be associated (e.g., appended) with a respective UUID 40.

At block 60F, a MBD 36 may be accessed. The data module 30 and/or another portion of the mapping environment 22 may be operable to access the MBD 36. In implementations, the data module 36 and/or another portion of the mapping environment 22 may be operable to access a CAD model associated with the respective component design 37.

At block 60G, one or more second (e.g., evaluation) sets of manufacturing instructions 51 may be generated. The evaluation module 32 and/or another portion of the mapping environment 22 may be operable to generate the evaluation set(s) of manufacturing instruction(s) 51. The evaluation set of manufacturing instructions 51 may be associated with the respective MBD 36. In implementations, the evaluation module 32 and/or another portion of the mapping environment 22 may be operable to generate the evaluation set(s) of manufacturing instructions 51. The evaluation set(s) of manufacturing instructions 51 may be generated utilizing any of the techniques disclosed herein, including any of the techniques associated with the manufacturing instruction(s) 49. The evaluation set(s) of manufacturing instruction(s) 51 may be associated with geometric feature(s) 38 of the respective component design(s) 37. The evaluation module 32 and/or another portion of the mapping environment 22 may be operable to generate the evaluation set(s) of manufacturing instructions 51 based on the CAD model(s) associated with the respective component design(s) 37. The manufacturing instructions 51 may be generated in various formats, including work instructions such as NC programs and/or G-codes.

The production set(s) of manufacturing instructions 49 may be evaluated through a relatively strict (e.g., test and engineering) approval process to meet a predefined set of requirements prior to being released for manufacturing physical components 23. In implementations, the evaluation set(s) of manufacturing instructions 51 may not evaluated by the approval process and/or a determination may not be made as to whether the evaluation set(s) of manufacturing instructions 51 meet the predefined requirements. In other implementations, the evaluation set(s) of manufacturing instructions 51 may be evaluated by the approval process and/or may meet the predefined requirements, which may be utilized to manufacture one or more physical components 23 (e.g., at block 60B) associated with the respective component design 37.

Various techniques for storing the evaluation set(s) of manufacturing instruction(s) 51 may be utilized. The data module 30 and/or another portion of the mapping environment 22 may be operable to store the evaluation set(s) of manufacturing instruction(s) 51 in the MES repository 42-2.

At block 60H, the evaluation set(s) of manufacturing instruction(s) 51 may be associated with (e.g., mapped to) the respective geometric feature(s) 38 and/or UUID(s) 40. The UUID(s) 40 may be assigned to respective geometric feature(s) 38 of the component design(s) 37. The evaluation module 32 and/or another portion of the mapping environment 22 may be operable to associate (e.g., map) the UUID(s) 40 of the respective component design(s) 37 to respective instruction(s) of the evaluation set(s) of manufacturing instruction(s) 51. A single instruction or group of instructions 49/51 may be executable to manufacture a respective geometric feature 38 of the component design 37. The UUID 40 may be associated with the respective instruction(s) 49/51. Instructions within the set of instructions 49/51 may be associated with different UUIDs 40.

Figure 4 discloses an evaluation set of the manufacturing instructions 51 according to an implementation. In the implementation of Figure 4, each line within an executable portion of the instructions (e.g., block 2308 to 2338) may be associated with a multi-axis machine and may specify respective XYZ coordinates and rotational axes A, C orientation of a tool tip of the machine. The instructions within the block 2308 to 2338 may be executable to manufacture a single geometric feature 38 associated with the UUID 40. Lines 2307 and 2339 may be non-executable (e.g., comments) and may indicate the start and end of the executable portion of instructions associated with the respective UUID 40 (e.g., block 2308 to 2338). A syntax of the comment may be human readable and may be utilized to identify similar feature(s) 38. In the implementation of Figure 5 and Figures 5-1 to 5-4, the rows of associated manufacturing instructions 51 may be aligned with columns of simulated and/or real manufacturing data 54, 57 to establish a matrix (e.g., table).

Variation in the manufacturing information 54, 57 may be associated with different operating conditions and/or environmental conditions of the manufacturing devices 21. Two or more manufacturing devices 21 may be utilized to manufacture components associated with the same component design 37. The coordinates and/or orientation associated with the respective manufacturing instructions 49, 51 may be the same or may differ between the manufacturing devices 21 due to variations between the devices 21 such as device type (e.g., construction) and/or tool geometry. Operating parameters of the manufacturing devices 21 may be the same or may differ. In implementations, a machine operator may adjust (e.g., override) the operating parameter(s) (e.g., speed) 48 such that a time scale of collected manufacturing information 57 may differ between the devices 21.

At block 60I, the production set(s) of manufacturing instruction(s) 49 may be accessed. The production set(s) of manufacturing instruction(s) 49 may be associated with one or more respective component designs 37. The data module 30 and/or another portion of the mapping environment 22 may be operable to access the production set(s) of manufacturing instruction(s) 49.

At block 60J, the production and evaluation set(s) of manufacturing instruction(s) 49, 51 may be compared to each other. The evaluation module 32 and/or another portion of the mapping environment 22 may be operable to compare the production and evaluation set(s) of manufacturing instruction(s) 49, 51. The evaluation set(s) of manufacturing instruction(s) 51 may differ from the production set(s) of manufacturing instruction(s) 49. In implementations, some of the instructions 49, 51 and/or associated parameters (e.g., values) 48 may be the same, but some may differ from each other. Executable and non-executable (e.g., comment) portions of the production set(s) of manufacturing instruction(s) 49 may omit any UUIDs 40. Non-executable (e.g., comment) portions of the evaluation set(s) of manufacturing instruction(s) 51 may include the UUIDs 40 corresponding to the adjacent executable portions of the manufacturing instruction(s) 51. Various techniques may be utilized to map the production instructions 49 to the respective evaluation instructions 51, including any of the techniques disclosed herein.

At block 60K, one or more third (e.g., mapped) sets of manufacturing instruction(s) 53 may be generated. The evaluation module 32 and/or another portion of the mapping environment 22 may be operable to generate the mapped set(s) of manufacturing instruction(s) 53. The production set(s) of manufacturing instruction(s) 49 may be mapped to the respective UUID(s) 40 to establish the mapped set(s) of manufacturing instruction(s) 53. The mapped set(s) of manufacturing instruction(s) 53 may include the UUID(s) 40 assigned to respective portions of the production set(s) of manufacturing instructions 49 based on the evaluation set(s) of manufacturing instructions 51. The UUID(s) 40 may be identified in the mapped set(s) of manufacturing instruction(s) 53 utilizing any of the techniques disclosed herein (e.g., Figure 4). In implementations, the assigned UUID(s) 40 may be embedded in non-executable portions of the mapped set of manufacturing instructions 53.

At block 60L, one or more simulations of manufacturing components 23 associated with the component design 37 may be performed. The evaluation module 32 and/or another portion of the mapping environment 22 may be operable to perform the simulations. The simulations may be performed in response to executing the mapped set(s) of manufacturing instruction(s) 53. Various simulation tools may be utilized to perform the simulation(s), including commercial tools such as VeriCut Force, Thirdwave or MachPro. The evaluation module 32 and/or another portion of the mapping environment 22 may incorporate and/or may interface with the simulation tool(s).

At block 60M, simulated manufacturing information (e.g., data) 54 may be generated based on the mapped set(s) of manufacturing instruction(s) 53. The simulated manufacturing data 54 may be generated in response to executing the simulation(s). The simulated manufacturing data 54 may be generated in response to (e.g., simulated) execution of the mapped set(s) of manufacturing instruction(s) 53. The simulated manufacturing data 54 may be associated with one or more parameters 48, 50. The parameters 48, 50 may be associated with (e.g., simulated) operation of the manufacturing device(s) 21 and may include any of the parameters disclosed herein.

At block 60N, the simulated manufacturing information 54 may be associated with (e.g., mapped to) the respective geometric feature(s) 38 and/or UUID(s) 40 of the component design 37. The disclosed techniques may establish traceability between the mapped set(s) of manufacturing instruction(s) 53 and the simulated manufacturing information 54. The UUID(s) 40 may be assigned to respective portions of the simulated manufacturing information 54. In the implementation of Figure 5 and Figures 5-1 to 5-4, the simulated manufacturing information 54 may be associated with the respective mapped manufacturing instruction(s) 53 and/or parameters 48, 50, including any of the parameters disclosed herein. The simulated manufacturing information 54 may be arranged in one or more predefined data structures according to the respective manufacturing instruction(s) 53 and/or parameter(s) 48, 50.

At block 60O, the real manufacturing information 57 associated with the component design(s) 37 may be accessed. The real manufacturing data 57 may be associated with execution of the production set(s) of manufacturing instructions 49. The real manufacturing information 57 may be accessed from memory, such as manufacturing equipment repository 42-4. The data module 30 and/or another portion of the mapping environment 22 may be operable to access the real manufacturing information 57.

At block 60P, the real manufacturing information 57 may be compared to the simulated manufacturing information 54. The evaluation module 32 and/or another portion of the mapping environment 22 may be operable to compare the real manufacturing information 57 and the simulated manufacturing information 54.

The mapping environment 22 may include various artificial intelligence (AI) functionality for establishing traceability between the real manufacturing information 57 and the geometric feature(s) 38 and/or UUID(s) 40 of the respective component design(s) 37. The evaluation module 32 and/or another portion of the mapping environment 22 may include, or may otherwise interface with, one or more machine learning (ML) models 56 (Figure 2). In implementations, the evaluation module 32 may include one or more model(s) 56. The ML model(s) 56 may be operable to perform the comparison(s) and/or mappings associated with the real manufacturing information 57 and/or simulated manufacturing information 54. The ML model 56 may be operable to compare the real manufacturing information 57 and the simulated manufacturing information 54.

At block 60Q, the real manufacturing information 57 may be associated with (e.g., mapped to) the respective geometric feature(s) 38 and/or UUID(s) 40 of the component design 37. Block 60Q may include assigning the UUID(s) 50 to respective portions of the real manufacturing data 57 based on the simulated manufacturing data 54 (e.g., Figure 5 and Figures 5-1 to 5-4). The disclosed techniques may establish traceability between the mapped set(s) of manufacturing instruction(s) 53 and the real manufacturing information 57. The UUID(s) 40 may be assigned to respective portions of the real manufacturing information 57. Respective portions of the real manufacturing data 57 may be mapped to the respective geometric feature(s) 38 and/or UUID(s) 40 in response to comparing the real manufacturing data 57 and the simulated manufacturing data 54. The evaluation module 32 and/or another portion of the mapping environment 22 may be operable to assign the UUID(s) 40 to the portions of the real manufacturing data 57 mapped to the respective geometric feature(s) 38 of the component design(s) 37, including in response to comparing the real manufacturing data 57 and the simulated manufacturing data 54. The real manufacturing data 57 and simulated manufacturing data 54 may be associated with a set of the parameters 48, 50. The real manufacturing information 57 may be associated with the respective mapped manufacturing instruction(s) 53 and/or parameters 48, 50, including any of the parameters disclosed herein. The real manufacturing information 57 may be arranged in one or more predefined data structures according to the respective manufacturing instruction(s) 53 and/or parameter(s) 48, 50 (e.g., Figure 5 and Figures 5-1 to 5-4). The evaluation module 32 and/or another portion of the mapping environment 22 may be operable to assign the UUID(s) 40 to the respective portions of the real manufacturing 57 data in response to comparing the real manufacturing data 57 and the simulated manufacturing data 54 with respect to one or more of the parameters 48, 50.

In implementations, the ML model 56 may be operable to map the respective portions of the real manufacturing data 57 to the respective geometric feature(s) 38 and/or UUID(s) 40 of the component design(s) 37. The ML model 56 may be operable to assign the UUID(s) 40 to the respective mapped portions of the real manufacturing data 57. Block 60Q may include using the ML model(s) 56 to assign the UUID(s) 40 to the respective portions of the real manufacturing data 57 based on the simulated manufacturing data 54.

Block 60Q may include accessing one or more of the manufacturing repositories 42, such as the manufacturing equipment repository 42-4. Block 60Q may include storing the assigned UUID(s) 40 with the respective portions of the real manufacturing data 57 as entries in the manufacturing equipment repository 42-4. The data module 30 and/or another portion of the mapping environment 22 may be operable to of the access the manufacturing repositories 42, including the manufacturing equipment repository 42-4. The data module 30 may be operable to store the mapped set(s) of the real manufacturing data 59 with the respective assigned UUID(s) 40 as one or more entries in the manufacturing equipment repository 42-4, including in the predefined data structure(s).

The method 60 may include training the ML model 56 based on information in one or more manufacturing repositories 42, which may be associated with one or more component designs 37. The method 60 may include comparing, using the trained ML model 56, one or more parameters 48, 50 associated with the real manufacturing data 57 and/or simulated manufacturing data 54 to determine the assignments of the UUID(s) 40 to the respective portions of the real manufacturing data 57 and establish the mapped set(s) of real manufacturing information 59.

Comparing the real manufacturing information 57 and the simulated manufacturing information 54 may include determining, used the trained ML model 56, one or more patterns in the real manufacturing data 57 that may substantially match one or more patterns in the simulated manufacturing data 54 associated with the respective component design(s) 37. For the purposes of this disclosure, the term "substantially" means ±10 percent of the stated value or relationship unless otherwise indicated.

At block 60R, the mapped real manufacturing information 59 may be evaluated. The evaluation module 32, another portion of the mapping environment 22 and/or another portion of the system 20 may be operable to evaluate the mapped real manufacturing information 59. The mapped real manufacturing data 59 may be evaluated with respect to one or more other entries of the repositories 42 associated with one or more of the assigned UUIDs 40.

Various machine learning models may be utilized. In implementations, the ML model 56 may include one or more artificial neural networks (ANNs). The neural network may include an input layer, one or more intermediate (e.g., hidden) layers, and an output layer. The data module 30 may be operable to communicate information to one or more input nodes of the input layer, including any of the information disclosed herein. The output layer may include one or more output nodes operable to generate the mappings and/or assignments.

The ML model 56 may be trained or otherwise associated with training data 52. The ML model 56 may be trained utilizing various supervised and/or unsupervised techniques based on the training data 52. The ML model 56 may be established based on training data 52, which may include supervised and/or unsupervised training set(s). The ML model 56 may be trained utilizing one or more production and/or evaluation sets of manufacturing instructions 49, 51 and/or real and/or simulated manufacturing information (e.g., data) 57, 54. The ML model 56 may be trained utilizing information in the repositories 42, including sets of information associated with the same and/or different component design(s) 37, geometric feature(s) 38, UUID(s) 40 and/or digital thread(s) 46.

The training data 52 may include simulated manufacturing data 54, which may be associated with UUID(s) 40 assigned to geometric feature(s) 38 of respective component design(s) 37. The training data 52 may include real manufacturing data 57, which may be associated with manufacture of one or more physical instances of the geometric feature(s) 38 of the component design(s) 37. The training data 52 may include evaluation manufacturing instructions 51 associated with the simulated manufacturing data 54 and the respective geometric feature(s) 38 and/or UUID(s) 40. The training data 52 may include production manufacturing instructions 49 associated with the real manufacturing data 57, which may omit (e.g., remove) any UUIDs 40. In implementations, the training data 52 may include one or more evaluation sets of manufacturing instructions 51 that omit any UUIDs 40 to establish the production sets of manufacturing instructions 49. The training data 52 may include one or more sets of simulated manufacturing data 54 that may omit any UUIDs 40, which may be used to substitute and/or augment the production sets of manufacturing data 49 for training the ML model 56. The simulation may substantially model the respective physical manufacturing device(s) 21, including the respective parameter(s) 48, 50 such as the operating and/or environmental conditions. A timescale of the simulation may be substantially aligned with a timescale of the real manufacturing data 57, which may improve a comparison of the real and simulated manufacturing data 57, 54. Supervision may include indicating whether the ML model 56 correctly or incorrectly assigns the geometric feature(s) 38 and/or UUID(s) 40 to the respective production manufacturing instructions 49 and/or real manufacturing information 57 to establish the mapped manufacturing instructions 53 and/or mapped manufacturing information 59.

The evaluation module 32, another portion of the mapping environment 22, and/or another portion of the system 20 may be operable to perform various functions based on the mapped real manufacturing information 59, including any of the functions disclosed herein. The configuration module 34 and/or another portion of the mapping environment 22 may be operable to set (e.g., adjust) one or more manufacturing parameters 48 to cause a change in operation of the manufacturing device(s) 21 prior to, during and/or subsequent to the manufacture of one or more of the components 23. In implementations, the ML model 56 may be operable to cause the manufacturing parameter(s) 48 to be adjusted based on the real manufacturing information 57 mapping(s) to the respective geometric feature(s) 38 and/or UUID(s) 40, which may be specified in the mapped manufacturing information 59.

The evaluation module 32 and/or another portion of the mapping environment 22 may be operable to generate one or more indicators 58 based on the mapped real manufacturing information 59. Various indicators may be utilized. In implementations, the indicator 58 may provide an indication of whether or not the as-manufactured geometric feature(s) 38 meet one or more inspection criterion 47 (e.g., pass or fail).

Various techniques may be utilized to determine (e.g., identify) and/or compare pattern(s) in the real manufacturing information 57 and/or aligning the real manufacturing information 57 with the simulated manufacturing information 54. Techniques may include machine learning and/or data mining.

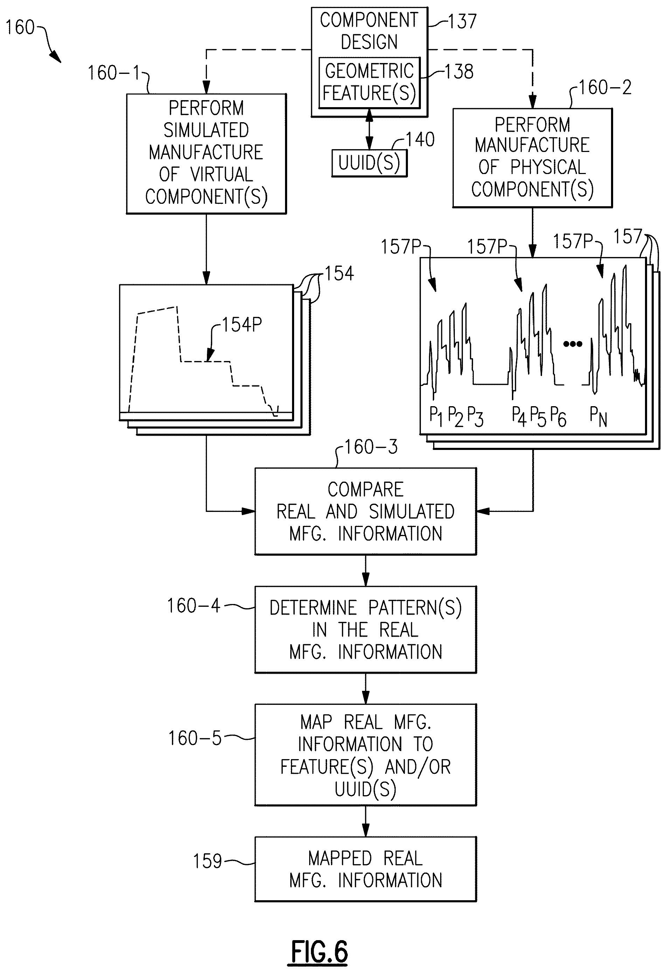

Figure 6 discloses a method in a flowchart 160 for evaluating manufacturing information (e.g., data) according to an implementation. The method 160 may be utilized to establish traceability of manufacturing information. The method 160 may be utilized to evaluate manufacturing information associated with various physical (e.g., as-manufactured) components, including any of the components and associated features disclosed herein, such as the component 23. Fewer or additional steps than are recited below could be performed within the scope of this disclosure, and the recited order of steps is not intended to limit this disclosure. Any of the functionality of method 160 may be incorporated into the method 60 and/or vice versa. The mapping environment 22 may be programmed with logic for performing the method 160. Reference is made to the system 20.

At block 160-1, one or more iterations of simulated manufacture of one or more virtual components may be performed. The virtual component(s) may be associated with respective component design(s) 137. In this disclosure, like reference numerals designate like elements where appropriate and reference numerals with the addition of one-hundred or multiples thereof designate modified elements that are understood to incorporate the same features and benefits of the corresponding original elements. The simulation(s) may be performed utilizing any of the techniques disclosed herein. The simulation(s) may generate one or more sets of simulated manufacturing information 154. The simulated manufacturing information 154 may include one or more respective patterns (e.g., profiles) 154P. The patterns 154P may be associated with manufacture of one or more geometric feature(s) 138 of the component design 137. The simulated manufacturing information 154 that establishes the respective pattern 154P may be associated with a respective parameter 48, 50 (Figure 1), including any of the parameters disclosed herein such as grinding time. The ML model 56 (Figure 1) may be operable to determine the pattern(s) 154P in the simulated manufacturing information 154.

At block 160-2, manufacture of one or more physical components may be performed. The physical component(s) may be associated with the respective component design(s) 137. Manufacture of the physical components may generate one or more sets of real manufacturing information 157. The real manufacturing information 157 may omit any UUIDs 140 and/or other identifiers associated with the respective geometric feature(s) 138.

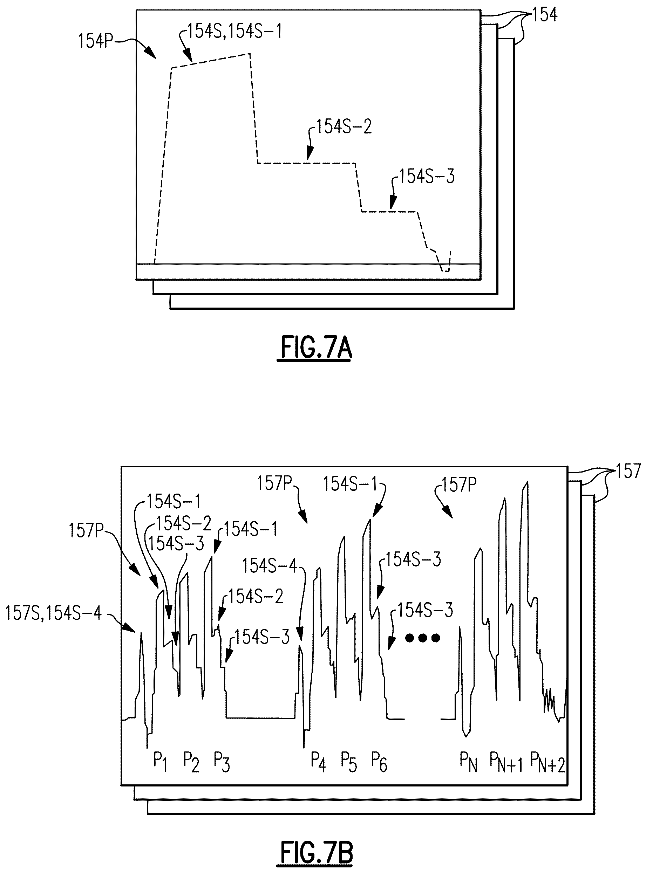

At block 160-3, the simulated and real manufacturing information 154, 157 may be compared. The ML model 56 may be operable to perform the comparison. In the implementation of Figures 6 and 7A-7B, the simulated manufacturing information 154 may include a curve associated with one simulated part (e.g., component). The simulated manufacturing information 154 may one or more patterns (e.g., profiles) 154P, which may be associated with the respective curve(s). The real manufacturing information 157 may include three curves associated with three parts (e.g., P₁, P₂, P₃). The real manufacturing information 157 may include one or more respective patterns (e.g., profiles) 157P, which may be associated with respective sets of curves (e.g., P₁ to P₃, P₄ to P₆, P_{N} to P_{N+2}). The production data 157 for the parts may be the same or may different from part-to-part due to various factors, including location, manufacturing device and/or start time. In the implementation of Figures 7A-7B, the curves associated with the respective patterns (e.g., profiles) 154P/157P may include respective segments 154S/157S. The segments 154S/154P may be associated with respective manufacturing steps during manufacture of the respective part. The segments 154S may include segments 154-1 to 154-3 (Figure 7A). The segments 157S may include segments 157S-1 to 157S-3 (Figure 7B). The segments 154S-1/157S-1 to 157S-3/157S-3 may be associated with the same manufacturing steps, which may be executed for one or more parts (e.g., P₁, P₂, P₃). Step 154S-1/157S-1 may be associated with a roughing operation (e.g., step) performed on the part. Step 154S-2/157S-2 may be associated with a semi-finishing operation performed on the part. Step 154S-2/157S-2 may be associated with a finishing operation performed on the part. Step 157S-4 may include tool resharpening, which may occur prior to steps 157S-1 to 157S-3 for a single part and/or may be common for a set of parts (e.g., P₁, P₂, P₃). In the implementation of Figure 7B, the steps may recur but the magnitude (e.g., power) may increase from part P₁ to part P₂, and then to part P₃ due to tool wear (e.g., dulling). Patterns 157P may be associated with individual parts (e.g., P₁) or may be associated with a set of parts (e.g., P₁, P₂, P₃). At block 160-4, one or more patterns 157P in the real manufacturing information 157 may be determined based on the comparison. The patterns 157P may be associated with the physical manufacture of geometric feature(s) 138 of the component design 137. The real manufacturing information 157 that establishes the respective pattern 157P may be associated with a respective parameter 48, 50 (Figure 1), including any of the parameters disclosed herein such as grinding time. Each of the patterns 157P may be associated with different instances of the same physical component, such as parts P₁ to P_{N}. The ML model 56 (Figure 1) may be operable to determine the pattern(s) 157P in the real manufacturing information 157. The pattern(s) 157P may be determined based on comparing the simulated manufacturing information 154 and any associated pattern(s) 154P to the real manufacturing information 157 associated with the same component(s) and/or parameter(s) 48, 50 (Figure 1). The pattern 154P associated with simulated manufacture of a single part may be compared to at least one, or all, of the patterns 157P for the set of parts associated with the same component design 137 and/or another (e.g., similar or derivative) component design 137.

At block 160-5, the real manufacturing information 157 may be mapped to the respective geometric feature(s) 138 and/or UUID(s) 140 to establish one or more sets of mapped real manufacturing information (e.g., data) 159. The real manufacturing information 157 may be mapped based on the determined pattern(s) 157P in the real manufacturing information 157. The machine learning model 56 (Figure 1) may be operable to map the real manufacturing information 157 to the respective geometric feature(s) 138 and/or UUID(s) 140 to establish the set(s) of mapped real manufacturing information 159.

The disclosed techniques may be utilized to perform various automation and/or analysis, including data analytics. The automation and/or analysis may be performed by various tools such as machine learning, data mining and/or knowledge graphs. Automatic data processing may be performed using the associated UUIDs to map other information associated with the mapped real manufacturing data and/or other unmapped real manufacturing data. Other uses of the mapped real manufacturing data may include, but are not limited to relating non-conformances to causal data, process capability trending and relationship to key process inputs, anomaly models, process design optimization, design for producibility or manufacturability, design for cost, incident investigation, quality prediction during part manufacturing, and/or process control and optimization. The data may be analyzed using the associated UUIDs to accurately calculate a ramp up and/or cycle times of the manufacturing device(s). The disclosed techniques may reduce scrap, rework and/or cost associated with evaluating the manufacturing information and/or manufacturing components. The techniques may be utilized to evaluate inspection instructions and/or collected information, which may reduce the cycle time for inspection and overall manufacturing time.

It should be understood that relative positional terms such as "forward," "aft," "upper," "lower," "above," "below," and the like are with reference to the normal operational attitude of the vehicle and should not be considered otherwise limiting.

Although the different examples have the specific components shown in the illustrations, embodiments of this disclosure are not limited to those particular combinations. It is possible to use some of the components or features from one of the examples in combination with features or components from another one of the examples.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A system for traceability of manufacturing data comprising:
one or more processors coupled to memory, the one or more processors collectively operable to execute a mapping environment, and the mapping environment operable to:
access a production set of manufacturing instructions associated with a component design;
access real manufacturing data associated with execution of the production set of manufacturing instructions;
generate an evaluation set of manufacturing instructions associated with respective unique identifiers, wherein the unique identifiers are assigned to respective geometric features of the component design, and the evaluation set of manufacturing instructions differs from the production set of manufacturing instructions;
generate a mapped set of manufacturing instructions including the unique identifiers assigned to respective portions of the production set of manufacturing instructions based on the evaluation set of manufacturing instructions;
generate simulated manufacturing data in response to simulated execution of the mapped set of manufacturing instructions; and
map respective portions of the real manufacturing data to the respective geometric features in response to comparing the real manufacturing data and the simulated manufacturing data.

2. The system as recited in claim 1, wherein the mapping environment is operable to:
access a computer-aided design (CAD) model associated with the component design; and
generate the evaluation set of manufacturing instructions based on the CAD model.

3. The system as recited in claim 1 or 2, wherein the mapping environment includes a machine learning model operable to map the respective portions of the real manufacturing data to the respective geometric features.

4. The system as recited in claim 3, wherein:
the machine learning model is trained with training data;
the training data includes simulated manufacturing data associated with unique identifiers assigned to geometric features of respective component designs; and
the training data includes real manufacturing data associated with manufacture of one or more physical instances of the geometric features of the component designs;
optionally wherein:
the training data includes manufacturing instructions associated with the simulated manufacturing data and the respective unique identifiers; and
the training data includes manufacturing instructions associated with the real manufacturing data that omits any unique identifiers.

5. The system as recited in any preceding claim, wherein the mapping environment is operable to:
assign the unique identifiers to the mapped portions of the real manufacturing data;
optionally wherein the mapping environment includes a machine learning model operable to assign the unique identifiers to the mapped portions of the real manufacturing data.

6. The system as recited in claim 5, wherein the mapping environment is operable to:
access a plurality of manufacturing repositories including a manufacturing equipment repository, the manufacturing equipment repository including collected information associated with operation of manufacturing equipment, and entries in the manufacturing repositories are associated with unique identifiers assigned to respective geometric features of a plurality of component designs to establish a set of digital threads linking the respective entries across the manufacturing repositories by the respective unique identifier; and
store the mapped portions of the real manufacturing data with the respective assigned unique identifiers as one or more entries in the manufacturing equipment repository;
optionally wherein the mapping environment is operable to:
evaluate the real manufacturing data with respect to another one of the entries associated with one or more of the assigned unique identifiers.

7. The system as recited in any preceding claim, wherein:
the real manufacturing data and the simulated manufacturing data are associated with a set of manufacturing parameters; and
the mapping environment is operable to assign the unique identifiers to the respective portions of the real manufacturing data in response to comparing the real manufacturing data and the simulated manufacturing data with respect to one or more of the manufacturing parameters.

8. The system as recited in any preceding claim, wherein the unique identifiers are embedded in non-executable portions of the mapped set of manufacturing instructions.

9. The system as recited in any preceding claim, wherein the component design is associated with a gas turbine engine component.

10. A non-transitory computer-readable medium having computer-executable instructions that, when executed by one or more processors, cause the one or more processors to collectively execute a mapping environment operable to:
access a production set of manufacturing instructions associated with a component design;
access real manufacturing data associated with execution of the production set of manufacturing instructions;
generate an evaluation set of manufacturing instructions associated with respective unique identifiers, wherein the unique identifiers are assigned to respective geometric features of the component design;
generate a mapped set of manufacturing instructions including the unique identifiers assigned to respective portions of the production set of manufacturing instructions based on the evaluation set of manufacturing instructions;
generate simulated manufacturing data in response to simulated execution of the mapped set of manufacturing instructions; and
assign the unique identifiers to respective portions of the real manufacturing data in response to comparing the real manufacturing data and the simulated manufacturing data.

11. The non-transitory computer-readable medium as recited in claim 10, wherein:
the mapping environment includes a machine learning model; and
the machine learning model is operable to assign the unique identifiers to the respective portions of the real manufacturing data.

12. A method for establishing traceability of manufacturing data comprising:
generating an evaluation set of manufacturing instructions associated with respective unique identifiers, wherein the unique identifiers are assigned to respective geometric features of a component design;
mapping a production set of manufacturing instructions to the unique identifiers to establish a mapped set of manufacturing instructions, the production set of manufacturing instructions associated with the component design;
generating simulated manufacturing data based on the mapped set of manufacturing instructions; and
assigning the unique identifiers to respective portions of the real manufacturing data based on the simulated manufacturing data.

13. The method as recited in claim 12, further comprising:
collecting the real manufacturing data during manufacturing of one or more physical instances of the geometric features of the component design.

14. The method as recited in claim 13, further comprising:
using a machine learning model to perform the assigning step;
optionally further comprising:
training the machine learning model based on information in one or more manufacturing repositories associated with one or more component designs; and
comparing, using the trained machine learning model, one or more manufacturing parameters associated with the real manufacturing data and the simulated manufacturing data to determine the assignments of the unique identifiers to the respective portions of the real manufacturing data;
optionally wherein the comparing step includes determining, using the trained machine learning model, one or more patterns in the real manufacturing data that substantially match one or more patterns in the simulated manufacturing data associated with the respective component design.

15. The method as recited in claim 12, 13 or 14, further comprising:
accessing one or more manufacturing repositories including a manufacturing equipment repository, wherein the manufacturing equipment repository includes collected information associated with operation of manufacturing equipment, and entries in the manufacturing repositories are associated with unique identifiers assigned to respective geometric features of a plurality of component designs to establish a set of digital threads linking the respective entries across the manufacturing repositories by the respective unique identifier; and
storing the assigned unique identifiers with the respective portions of the real manufacturing data as entries in the manufacturing equipment repository.
